(19) Europäisches Patentamt
European Patent Office
Office européen des brevets

(11) **EP 2 573 944 B1**

(12) **EUROPEAN PATENT SPECIFICATION**

(45) Date of publication and mention
of the grant of the patent:
**25.07.2018 Bulletin 2018/30**

(21) Application number: **11840399.7**

(22) Date of filing: **25.04.2011**

(51) Int Cl.:
*H04B 1/69* ^(2011.01)     *H04L 5/00* ^(2006.01)
*H04L 27/26* ^(2006.01)    *H04J 13/00* ^(2011.01)
*H04L 27/00* ^(2006.01)

(86) International application number:
**PCT/CN2011/073268**

(87) International publication number:
**WO 2012/062088 (18.05.2012 Gazette 2012/20)**

(54) **METHOD AND APPARATUS FOR DECODING AN UPLINK CONTROL CHANNEL**

VERFAHREN UND VORRICHTUNG ZUR DEKODIERUNG EINES UPLINK-STEUERKANALS

PROCÉDÉ ET DISPOSITIF POUR DÉCODER UN CANAL DE COMMANDE DE LIAISON
ASCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2010 CN 201010541207**

(43) Date of publication of application:
**27.03.2013 Bulletin 2013/13**

(73) Proprietor: **ZTE Corporation
Shenzhen, Guangdong 518057 (CN)**

(72) Inventors:
• **ZHANG, Na
Shenzhen
Guangdong 518057 (CN)**
• **LI, Ping
Shenzhen
Guangdong 518057 (CN)**

(74) Representative: **Cabinet Laurent & Charras
Le Contemporain
50 Chemin de la Bruyère
69574 Dardilly Cedex (FR)**

(56) References cited:
**WO-A1-2008/039303**     **CN-A- 101 039 294**
**CN-A- 101 047 474**     **CN-A- 101 494 491**

• **SEIGO NAKAO ET AL: "Performance
Enhancement of E-UTRA Uplink Control Channel
in Fast Fading Environments", VTC SPRING 2009,
IEEE 69TH VEHICULAR TECHNOLOGY
CONFERENCE, 29 April 2009 (2009-04-29), pages
1-5, XP055354201, DOI:
10.1109/VETECS.2009.5073785**
• **S. COLERI ET AL: "Channel estimation
techniques based on pilot arrangement in OFDM
systems", IEEE TRANSACTIONS ON
BROADCASTING., vol. 48, no. 3, 7 November 2002
(2002-11-07), pages 223-229, XP055354356, US
ISSN: 0018-9316, DOI: 10.1109/TBC.2002.804034**

**EP 2 573 944 B1**

**Description**

Technical Field

The present invention relates to the field of communication, and in particular, to a decoding method and apparatus for an uplink control channel.

Background Art

The LTE (Long Term Evolution) project is an evolution of 3G, a transition between 3G and 4G, and it is a global standard of 3.9G. It can provide peak rates of downlink 100Mbit/s and uplink 50Mbit/s under a frequency spectrum bandwidth of 20MHz, improves the performance of edge users of a cell, increases the capacity of the cell and reduces the system delay.

The technical object of LTE can be summarized as: capacity increase: under a bandwidth of 20MHz, the downlink peak rate reaches 100 Mbit/s, uplink peak rate reaches 50 Mbit/s, and the frequency spectrum utilization ratio reaches two to four times of the R6 planned value in the 3rd Generation Partnership Project (3GPP); coverage enhancement: the edge bit rate of the cell is improved, an optimal capacity is met within a 5km area, with a slight decrease within a 30km area, and a coverage radius of 100km is supported; mobility improvement: the performance is optimal under 0-15km/h, with a high performance under 15-120 km/h, supporting 120-350 km/h, and even 500km/h and so on in certain frequency bands.

At present, as for the uplink control channel (PUCCH), a plurality of UEs are multiplexed on the same resource block (RB), and a high performance can be obtained when there is no frequency offset or there is a small frequency offset. However, with the increase of mobility speed, when a UE is in an environment of high-speed movement, the decoding performance of the UE deteriorates due to doppler frequency shift caused by fast movement.

The document "Seigo Nakao ETAL: Performance Enhancement of E-UTRA Uplink Control Channel in Fast Fading Environments, VTC Spring 2009, IEEE 69th Vehicular Technology Conference, 1April 2009 (2009-04-01), page 1-5" proposes a PUCCH code design which can suppress the effect of inter-code interferences among the orthogonal cover sequences.

The document "S.Coleri ET AL: Channel estimation techniques based on pilot arrangement in OFDM systems, IEEE TRANSATIONS ON BROADCASTING., vol 48, no.3,1 September 2002 (2002-09-01), pages 223-229" discloses channel estimation techniques for OFDM based on comb type pilot arrangement.

Summary of the Invention

The present invention provides a decoding method for an uplink control channel according to claim 1 and an apparatus for an uplink control channel according to claim 6, with the dependent claims providing further details of the invention. With the method and apparatus of the present invention, when cyclic shifts of all UEs on the same RB in the same time slot are staggered with each other, frequency offset estimation and compensation are added for the uplink control channel, there is only minor performance loss in the case of no frequency offset or a small frequency offset; the decoding accuracy of DTX is greatly enhanced in the case of a big frequency offset.

Brief Description of Drawings

FIG. 1 illustrates a decoding method for an uplink control channel according to an example of the present invention;
FIG. 2 illustrates the distribution of pilot and data of an uplink control channel (PUCCH) of format 1/1a/1b for normal CP;
FIG. 3 illustrates the distribution of pilot and data of an uplink control channel (PUCCH) of format 1/1a/1b for extended CP;
FIG. 4 illustrates the distribution of different UE cyclic shifts $n_{cs}$ and orthogonal sequence index numbers $\bar{n}_{oc}$ of format 1/1a/1b for normal CP when $\Delta_{\text{shift}}^{\text{PUCCH}}=3$ ;
FIG. 5 illustrates the flow of frequency offset estimation and compensation;
FIG. 6 illustrates a cyclic shift before elimination of the cyclic shift offset between symbols;
FIG. 7 illustrates a cyclic shift after elimination of the cyclic shift offset between symbols;
FIG. 8 illustrates the subsequent decoding processing flow after frequency offset estimation and compensation;

FIG. 9 is a schematic diagram of a decoding apparatus for an uplink control channel according to an example of the present invention;

FIG. 10 is another schematic diagram of a decoding apparatus for an uplink control channel according to an example of the present invention.

Preferred Embodiments of the Present Invention

Examples of the present invention will be described below in detail with reference to the drawings. It should be pointed out that the features of the examples and examples of the present application may be combined with each other without conflict.

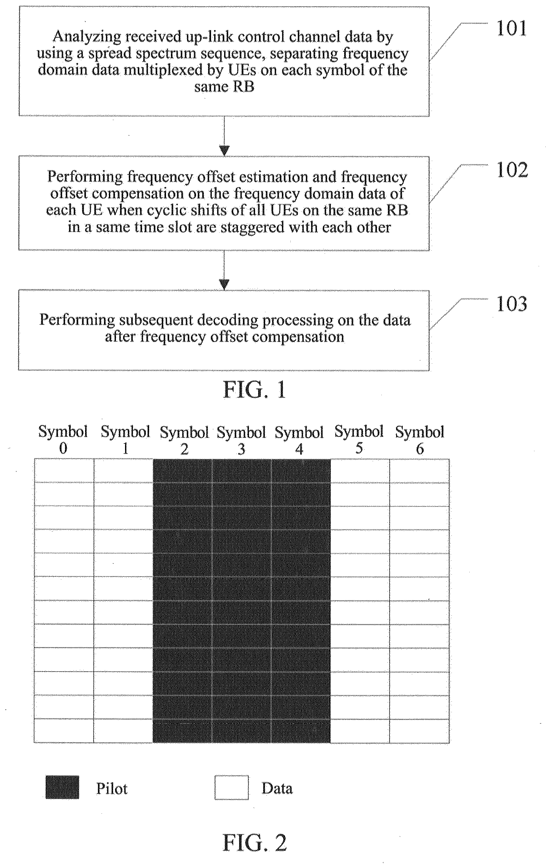

As shown in FIG. 1, the decoding method for an uplink control channel comprises the following steps:

In step 101, an analyzing and separation step, received uplink control channel data are analyzed by using a spread spectrum sequence, frequency domain data multiplexed by user equipments (UE) on each symbol of a same resource block (RB) are separated, and frequency domain data of each UE are obtained;

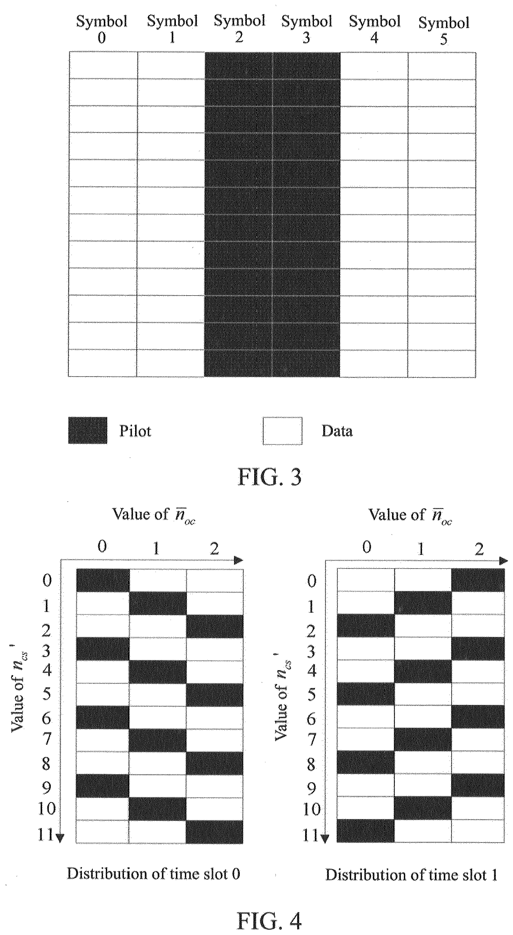

FIG. 2 illustrates the distribution of pilot and data of an uplink control channel (PUCCH) for format 1/1a/1b in a LTE system, wherein, the uplink control channel adopts a normal cyclic prefix (Normal CP), symbols 2, 3, 4 are pilot, and symbols 0, 1, 5 and 6 are data; FIG. 3 illustrates the distribution of pilot and data of another uplink control channel (PUCCH) for format 1/1a/1b, and the uplink control channel in FIG. 3 adopts an extended cyclic prefix (Extended CP), symbols 2, 3 are pilot, and symbols 0, 1, 4 and 5 are data.

The scrambling and block-wise spread process of the UE for the format 1/1a/1b of an uplink control channel is provided in combination with the formulas (1)-(2) in the protocol 3GPP TS 36.212: "Evolved Universal Terrestrial Radio Access (E-UTRA), Physical Channels and Modulation".

$$r^{\text{PUCCH}}\left(m'N_{\text{RS}}^{\text{PUCCH}}M_{\text{sc}}^{\text{RS}}+mM_{\text{sc}}^{\text{RS}}+n\right)=\overline{w}(m)z(m)r_{u,v}^{(\alpha)}(n) \qquad \text{Formula (1)}$$

wherein, $z(m)=1$ ; $r_{u,v}^{(\alpha)}(n)$ is a cyclic shift sequence with a length $N_{\text{seq}}^{\text{PUCCH}}=12$ , $r_{u,v}^{(\alpha)}(n)=e^{j\alpha n}\overline{r}_{u,v}(n),$ $0\le n < 12$, wherein, $\overline{r}_{u,v}(n)$ is a base sequence, and the calculation of $\alpha(n_s,l)$ is as follows:

$$\overline{n}_{\text{oc}}(n_s)= \left\lfloor n'(n_s)\cdot\Delta_{\text{shift}}^{\text{PUCCH}}\Big/N'\right\rfloor$$

$$\alpha(n_s,l)= 2\pi\cdot\overline{n}_{\text{cs}}(n_s,l)\Big/N_{\text{sc}}^{\text{RB}}$$

$$\overline{n}_{\text{cs}}(n_s,l)= \qquad\qquad\qquad\qquad\qquad \text{Formula (2)}$$

$$\begin{cases} \left[\left[n_{\text{cs}}^{\text{cell}}(n_s,l)+\left(n'(n_s)\cdot\Delta_{\text{shift}}^{\text{PUCCH}}+\left(\overline{n}_{\text{oc}}(n_s)\bmod\Delta_{\text{shift}}^{\text{PUCCH}}\right)\right)\bmod N'\right]\bmod N_{\text{sc}}^{\text{RB}} & \text{Normal CP} \\ \left[\left[n_{\text{cs}}^{\text{cell}}(n_s,l)+\left(n'(n_s)\cdot\Delta_{\text{shift}}^{\text{PUCCH}}+\overline{n}_{\text{oc}}(n_s)\right)\bmod N'\right]\bmod N_{\text{sc}}^{\text{RB}} & \text{Extended CP} \end{cases}$$

Wherein, the value of $n_{\text{cs}}^{\text{cell}}(n_s,l)$ is determined according to the protocol, and the calculation of $n'(n_s)$ should be considered respectively when $n_s$ is an even time slot and an odd time slot, and the calculation of $n'(n_s)$ is shown in the following formulas, i.e. formula (3) and formula (4):

as for an even time slot $n_s$ :

$$n'(n_s)=\begin{cases} n_{\text{PUCCH}}^{(1)} & n_{\text{PUCCH}}^{(1)}<c\cdot N_{\text{cs}}^{(1)}\Big/\Delta_{\text{shift}}^{\text{PUCCH}} \\ \left(n_{\text{PUCCH}}^{(1)}-c\cdot N_{\text{cs}}^{(1)}\Big/\Delta_{\text{shift}}^{\text{PUCCH}}\right)\bmod\left(c\cdot N_{\text{sc}}^{\text{RB}}\Big/\Delta_{\text{shift}}^{\text{PUCCH}}\right) & \text{otherwise} \end{cases} \qquad \text{Formula (3)}$$

as for an odd time slot $n_s$ :

$$n'(n_s) = \begin{cases} \left[ c(n'(n_s - 1) + 1) \right] \bmod \left( cN_{sc}^{RB} / \Delta_{shift}^{PUCCH} + 1 \right) - 1 & n_{PUCCH}^{(1)} \geq c \cdot N_{cs}^{(1)} / \Delta_{shift}^{PUCCH} \\ \lfloor h/c \rfloor + (h \bmod c) N' / \Delta_{shift}^{PUCCH} & \text{otherwise} \end{cases} \quad \text{Formula (4)}$$

wherein, $\quad \mathrm{h} = \left( \mathrm{n'}(\mathrm{n_s} - 1) + \mathrm{d} \right) \bmod \left( \mathrm{cN'} / \Delta_{shift}^{PUCCH} \right), \quad d = \begin{cases} 2 & \text{Normal CP} \\ 0 & \text{Extended CP} \end{cases}.$

The orthogonal sequence $w_{\overline{n}_{oc}}(i)$ adopted in block-wise spread is as shown in Table 1.

Table 1

| Orthogonal sequence $\overline{n}_{oc}(n_s)$ | Normal CP | Extended CP |
|---|---|---|
| 0 | [1 1 1] | [1 1] |
| 1 | [1 $e^{j2\pi/3}$ $e^{j4\pi/3}$] | [1 -1] |
| 2 | [1 $e^{j4\pi/3}$ $e^{j2\pi/3}$] | N/A |

As can be seen from Formula (2), different UE data can be distinguished from each other according to difference in cyclic shift interval (represented by $\Delta_{shift}^{PUCCH}$) through cyclic shift $n_{cs}'$ or, cyclic shift $n_{cs}'$ and orthogonal sequence index number $\overline{n}_{oc}$. Specifically, if $\Delta_{shift}^{PUCCH} = 3$, the frequency domain data of the UE on each symbol can be separated only through the cyclic shift, if $\Delta_{shift}^{PUCCH} = 1$ or 2, the base station may need to separate the UE data according to both of the cyclic shift and orthogonal sequence index number, and if the cyclic shifts of all UEs on the same RB in the same time slot are staggered with each other, the frequency domain data of the UE on each symbol can be separated from each other only through the cyclic shift, otherwise, if the cyclic shifts of all UEs on the same RB in the same time slot repeat, then the base station needs to separate the UE data according to both of the cyclic shift and orthogonal sequence number. As for Normal CP, if $\Delta_{shift}^{PUCCH}$ is set to be 3, different values of UE $n_{cs}'$ and $\overline{n}_{oc}$ are as shown in FIG. 4.

The received data are analyzed according to the following formula by using a spread spectrum sequence (which is a ZC sequence (Zadoff-Chu sequence) in the following formula):

$$\sum_{n=0}^{11} Y_{ant}(n, l, t) \cdot \gamma_{u,v}^{(\alpha^{ue}(l,t))*}(n) = \sum_{n=0}^{11} (Y_{ant}(n, l, t) \cdot \overline{\gamma}_{u,v}^{*}(n)) e^{-j\frac{2\pi}{12} \cdot n_{cs}(l,t) \cdot n} \quad \text{Formula (5)}$$

wherein, $Y_{ant}(n,l,t)$ is frequency domain received data, $ant = 0,...AntNum$ -1 is antenna index number, $n = 0,...,11$ is subcarrier index number, $l = 0,...,6$; $t = 0,1$ is time slot index number; $\overline{\gamma}_{u,v}(n)$ is base sequence.

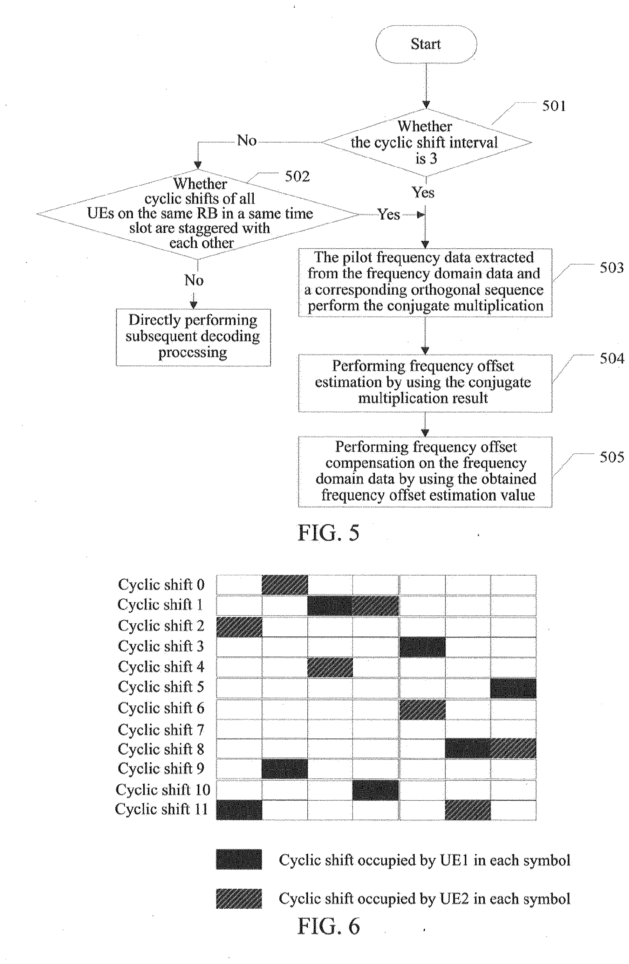

It is assumed that data of two UEs are multiplexed on one RB, as shown in FIG. 5, cyclic shifts of two UEs are on each symbol in time slot 0, and for each UE, its own data can be separated through the cyclic shift on each symbol. The cyclic shift offset between different symbols in the frequency domain data of each UE is eliminated; the conjugate multiplication sub-module and the frequency offset compensation sub-module perform processing by using the frequency domain data with elimination of offset.

In order to facilitate subsequent processing, preferably, the frequency domain data obtained after elimination of offset through eliminating the cyclic shift offset between different symbols in the frequency domain data of each UE is recorded as $Sym_l^{ue}$, wherein, as for the normal CP, $l = 0,1,2,3,4,5,6$, while for the extended CP, $l = 0,1,2,3,4,5$. The specific process will be described exemplarily: referring to FIG. 6, it is assumed that there are two UEs on one RB, the received data of the uplink control channel are analyzed by using a ZC sequence in step 101, and after the frequency domain data multiplexed by different UEs on each symbol of the same RB are separated, the cyclic shifts of UE1 on each symbol corresponding to time slot 0 are respectively: 11, 9, 1, 10, 3, 8, 5; the cyclic shifts of UE2 on each symbol corresponding to time slot 0 are respectively: 2, 0, 4, 1, 6, 11, 8 (on each symbol, corresponding

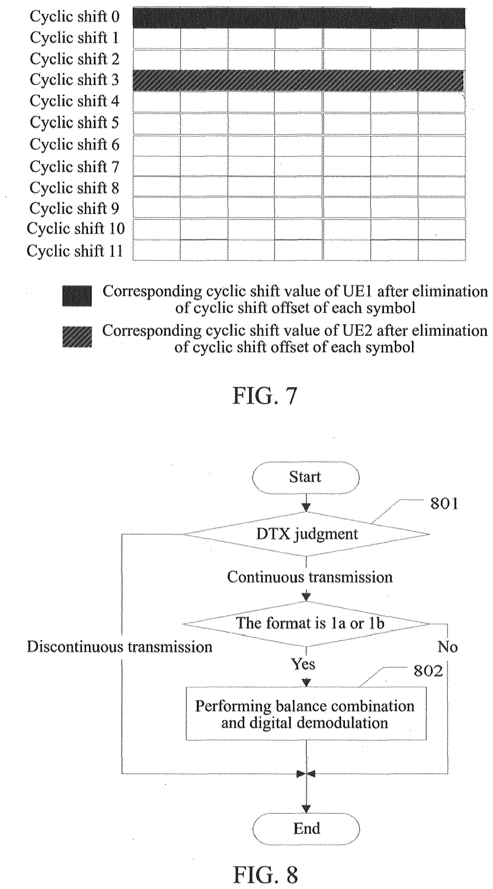

$$mod\left(n_{cs}^{cell}(n_s, l), 12\right) = [11\ 9\ 1\ 10\ 3\ 8\ 5]$$ , $n_s = 0, l = 0 \sim 6$), then after the data on each symbol are cyclically left-shifted by a number of $mod(n_{cs}^{cell}(n_s, l), 12)$, the cyclic shift value of UE 1 on each symbol changes to 0, and the corresponding cyclic shift value of UE 2 on each symbol changes to 3 (see FIG. 7).

In step 102, a frequency offset estimation and compensation step, frequency offset estimation and frequency offset compensation are performed on the frequency domain data of each UE when cyclic shifts of all UEs on the same RB in the same time slot are staggered with each other;

the frequency domain data used in the frequency offset estimation and compensation step may be the frequency domain data obtained from direct separation, and preferably, the frequency domain data after elimination of offset are adopted.

As shown in FIG. 5, the frequency offset estimation and compensation step comprises the following steps:

in step 501, whether the cyclic shift interval ($\Delta_{shift}^{PUCCH}$) is 3 is judged, and if yes, step 503 and subsequent steps are executed, otherwise, step 502 is executed;

in step 502, whether the cyclic shifts of all UEs on the same RB in a same time slot are staggered with each other is judged, and if yes, step 503 and subsequent steps are executed, otherwise, subsequent coding processing (including DTX judgment, balance combination, demodulation and so on) is directly performed.

The above step 501 is a preferred judging manner, since as for a case where $\Delta_{shift}^{PUCCH}$ is 3, it is definite that the cyclic shifts of all UEs on the same RB in a same time slot are staggered with each other, and the difficulty of judgment can be reduced if whether $\Delta_{shift}^{PUCCH}$ is 3 is firstly judged. As can be appreciated, whether the cyclic shifts of all UEs on the same RB in a same time slot are staggered with each other is directly judged.

In step 503, conjugate multiplication is performed on the pilot frequency data extracted from the frequency domain data and a corresponding orthogonal sequence $w_{\overline{n}_{oc}}$, and the conjugate multiplication result is recorded as

$Pilot_{l_{pilot}}^{ue}$ ; wherein, as for normal CP, $l_{pilot} = 2,3,4$, and as for extended CP, $l_{pilot} = 2,3$;

it is defaulted that the UE and the network side (for example the base station) select the same orthogonal sequence; in step 504, frequency offset estimation is performed by using $Pilot_l^{ue}$ ; specifically frequency offset estimation is performed according to the following formula:

$$FOE_{Curr}^{ue} = angle\left(Pilot_M^{ue} \cdot conj\left(Pilot_N^{ue}\right)\right) / \left(2\pi\left((M-N)/14\right)10^{-3}\right)$$

wherein, *angle*( ) represents taking phase, and *conj*( ) represents conjugation. wherein, the values of (*M,N*) may be (4,2), (3,2), (4,3) or phase averages obtained from the above combinations. M and N are selected from the pilot frequency symbols, for example as for the Normal CP, the pilot frequency occupies symbols 2, 3, 4, so M and N can only be selected from 2, 3, 4, provided that the value of N and that of M are not repeated. Here the frequency offset is estimated by using two pilot frequency symbols.

Frequency offset estimation may be performed directly according to a frequency offset estimation value. In order to reduce the volatility of frequency offset estimation, the frequency offset estimation value $FOE_{Curr}^{ue}$ of the current sub-frame is filtered by using a history value $FOE_{last}^{ue}$, which can make the estimation value more smooth:

$FreOffEst^{ue} = (1-p) \cdot FOE_{last}^{ue} + p \cdot FOE_{Curr}^{ue}$, wherein *p* is a filter factor, and the history value is updated:

$FOE_{Last}^{ue} = FreOffEst^{ue}$, which is used in the next filtering.

In step 505, frequency offset compensation is performed on the frequency offset estimation value by using the

frequency domain data $Sym_l^{ue}$.

If $N = 2$,

$$PhoseOffset^{ue} = -[-2 \quad -1 \quad 0 \quad 1 \quad 2 \quad 3 \quad 4] \cdot 2\pi \cdot FreOffEst^{ue} \cdot \frac{1}{14 \cdot 10^{-3}};$$

$$SymFoc_l^{ue} = Sym_l^{ue} \cdot e^{j \cdot PhaseOffset^{ue}}$$

, wherein, *PhoseOffset*$^{ue}$ represents phase offset, and

$SymFoc_l^{ue}$ represents the value after frequency offset compensation. $e^{j \cdot x} = \cos(x) + j \cdot \sin(x)$ is a form for representing a complex number, $\cos(x)$ is the real part of the complex number; $\sin(x)$ is the imaginary part of the complex number, and j represents the imaginary part of the complex number.

As for normal CP, $l$=0-6, and as for extended CP, $l$=0-5.

The above formula should be adjusted correspondingly when other values are taken as N.

In addition to the above frequency offset estimation and frequency offset compensation method, other existing methods can also be adopted.

In step 103, a decoding processing step, subsequent decoding processing is performed on the data after frequency offset compensation.

As shown in FIG. 8, the decoding processing step specifically comprises the following steps:

In step 801, the discontinuous transmission (DTX) judgment is performed on the data after frequency offset compensation;

before the DTX judgment, firstly block-wise despread is performed on the data after frequency offset compensation to obtain a data detection window and a pilot detection window, and the noise power and the signal power of each UE are calculated according to the data detection window and the pilot detection window; if a ratio of the signal power to the noise power is greater than a preset threshold, it is decided that it is continuous transmission, otherwise, it is decided that it is discontinuous transmission;

in step 802, balance combination and digital demodulation are performed when judging that it is continuous transmission and the data format is 1a or 1b; when judging that it is continuous transmission and the data format is 1 or judging that it is discontinuous transmission, the processing is over.

In order to facilitate subsequent processing, the frequency offset estimating and compensating module further comprises an offset eliminating sub-module, which is configured to eliminate cyclic shift offsets between different symbols in the frequency domain data of each UE; the conjugate multiplication sub-module and the frequency offset compensation sub-module are configured to perform processing by using the frequency domain data with elimination of offsets.

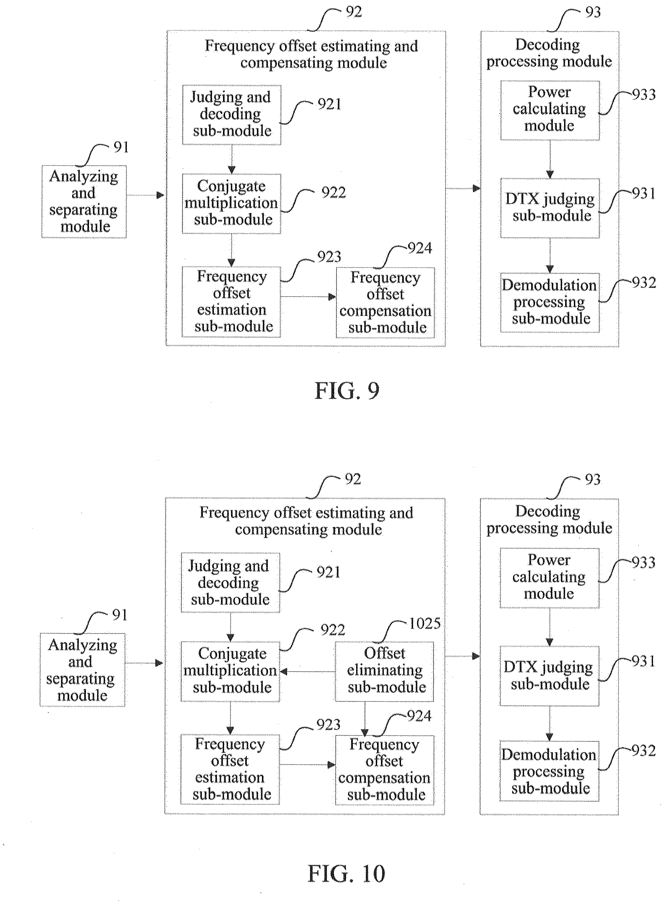

In order to implement the above method, the present invention further provides a decoding apparatus for an uplink control channel, as shown in FIG. 9, which comprises:

an analyzing and separating module 91, which is configured to analyze received uplink control channel data by using a spread spectrum sequence, separate frequency domain data multiplexed by user equipments (UE) on each symbol of a same resource block (RB), and obtain frequency domain data of each UE.

The analyzing and separating module separates the frequency domain data multiplexed by UEs on each symbol through distinguishing between cyclic shifts, or cyclic shifts and orthogonal sequence index numbers.

A frequency offset estimating and compensating module 92, which is configured to perform frequency offset estimation and frequency offset compensation on the frequency domain data of each UE when cyclic shifts of all UEs on the same RB in the same time slot are staggered with each other; and

a decoding processing module 93, which is configured to perform subsequent decoding processing on the data after frequency offset compensation.

Specifically, the frequency offset estimating and compensating module 92 comprises:

a judging and decoding sub-module 921, which is configured to judge whether cyclic shifts of all UEs on the same RB in the same time slot are staggered with each other, and when it is judged that the cyclic shifts of all UEs on the same RB in the same time slot are not staggered with each other, directly perform the subsequent decoding processing on the frequency domain data of each UE;

the judging and decoding sub-module, when judging whether cyclic shifts of all UEs on the same RB in the same time slot are staggered with each other, firstly judges whether a cyclic shift interval is 3, and if yes, it considers that the cyclic shifts of all UEs on the same RB in the same time slot are staggered with each other, otherwise, then it judges whether cyclic shifts of all UEs on the same RB in the same time slot are staggered with each other.

a conjugate multiplication sub-module 922, which is configured to perform conjugate multiplication on pilot frequency data extracted from the frequency domain data and a corresponding orthogonal sequence $w_{\overline{n}_{oc}}$ when cyclic shifts of all UEs on the same RB in a same time slot are staggered with each other, and the obtained data are recorded as $Pilot_{l_{pilot}}^{ue}$ ;

a frequency offset estimation sub-module 923, which is configured to perform frequency offset estimation by using $Pilot_{l}^{ue}$ ; and

a frequency offset compensation sub-module 924, which is configured to perform frequency offset compensation on the frequency offset estimation value by using the frequency domain data $Sym_{l}^{ue}$ .

In order to facilitate subsequent processing, as shown in FIG. 10, the frequency offset estimating and compensating module further comprises an offset eliminating sub-module 1025, which is configured to eliminate cyclic shift offsets between different symbols in the frequency domain data of each UE; the conjugate multiplication sub-module and the frequency offset compensation sub-module perform processing by using the frequency domain data with elimination of offsets.

Specifically, the decoding processing module 93 comprises:

a discontinuous transmission (DTX) judging sub-module 931, which is configured to perform discontinuous transmission (DTX) judgment on the data after frequency offset compensation; and

a demodulation processing sub-module 932, which is configured to perform balance combination and demodulation when judging that it is continuous transmission and a data format is 1a or 1b; and not to perform processing when judging that it is continuous transmission and the data format is 1 or judging that it is discontinuous transmission.

Furthermore, the decoding processing module further comprises a power calculating module 933, which is configured to perform block-wise spread on the data after frequency offset compensation to obtain a data detection window and a pilot detection window, and calculate the noise power and the signal power of each UE according to the data detection window and the pilot detection window; the DTX judging sub-module 931 performs DTX judgment on the data transmitted by each UE according to the noise power and the signal power, and if a ratio of the signal power to the noise power is greater than a preset threshold, it decides that it is continuous transmission, otherwise, it decides that it is discontinuous transmission.

See the above description of the decoding method for the specific implementation mode of each module or sub-module.

A person having ordinary skill in the art can appreciate that all or part of the steps of the above method may be implemented by instructing related hardware with a program, which may be stored in a computer-readable medium, such as a read-only memory, a magnetic disk or an optical disk. Optionally, all or part of the steps of the above examples may also be implemented by using one or more integrated circuits. Correspondingly, each module/unit in the above examples may be implemented in the form of hardware, or in the form of software functional modules. The present invention is not limited to any particular form of combination of hardware and software.

Compared with the related art, frequency offset estimation and compensation is added at the receiving terminal for the uplink control channel in the present invention, and there is only minor performance loss in the case of no frequency offset or a small frequency offset; in the case of a big frequency offset, the decoding accuracy of DTX (Discontinuous Transmission) is greatly enhanced, thereby overcoming the problem of performance deterioration under big frequency offset in the related art.

Industrial Applicability

In the decoding method and apparatus for uplink control channel provided in the present invention, frequency offset estimation and compensation is added, and there is only minor performance loss in the case of no frequency offset or a small frequency offset; in the case of a big frequency offset, the decoding accuracy of DTX is greatly enhanced, thereby overcoming the problem of performance deterioration under big frequency offset in the related art.

**Claims**

1. A decoding method for an uplink control channel, comprising:

an analyzing and separation step, analyzing received uplink control channel data by using a spread spectrum sequence, separating frequency domain data multiplexed by user equipments, UE, on each symbol of a same resource block, RB, and obtaining frequency domain data of each UE (S101);
a frequency offset estimation and compensation step, performing frequency offset estimation and frequency offset compensation on the frequency domain data of each UE when cyclic shifts of all UEs on the same RB in a same time slot are staggered with each other (S102); and
a decoding processing step, performing subsequent decoding processing on the data after frequency offset compensation (S103); wherein,
the frequency offset estimation and compensation step further comprises:

judging whether cyclic shifts of all UEs on the same RB in the same time slot are staggered with each other;
if yes, proceeding to implement the frequency offset estimation and compensation step, and if not, directly performing the subsequent decoding processing;
wherein, said performing frequency offset estimation and frequency offset compensation on the frequency domain data of each UE comprises:

performing conjugate multiplication on pilot frequency data extracted from the frequency domain data and a corresponding orthogonal sequence;
performing frequency offset estimation by using a conjugate multiplication result; and
performing frequency offset compensation on the frequency domain data by using an obtained frequency offset estimation value;

the step of judging whether cyclic shifts of all UEs on the same RB in the same time slot are staggered with each other comprises: firstly judging whether a cyclic shift interval is 3, and if yes, considering that the cyclic shifts of all UEs on the same RB in the same time slot are staggered with each other, otherwise, then judging whether the cyclic shifts of all UEs on the same RB in the same time slot are staggered with each other.

2. The method according to claim 1, wherein,
the step of separating frequency domain data multiplexed by UEs on each symbol of a same RB comprises:
separating the frequency domain data multiplexed by UEs on each symbol through distinguishing between cyclic shifts, or cyclic shifts and orthogonal sequence index numbers.

3. The method according to claim 1, wherein,
the decoding processing step comprises:

performing discontinuous transmission, DTX, judgment on the data after frequency offset compensation; and
performing balance combination and demodulation when judging to be continuous transmission and a data format is 1a or 1b.

4. The method according to claim 3, wherein,
before performing DTX judgment, the decoding processing step further comprises: firstly performing block-wise spread on the data after frequency offset compensation to obtain a data detection window and a pilot detection window, and calculating noise power and signal power of each UE according to the data detection window and the pilot detection window;
said performing DTX judgment comprises:
if a ratio of the signal power to the noise power is greater than a preset threshold, judging to be continuous transmission, and if the ratio is less than or equal to the preset threshold, judging to be discontinuous transmission.

5. The method according to claim 1, wherein,

before said performing frequency offset estimation on the frequency domain data of each UE, the frequency offset estimation and compensation step further comprises:

eliminating cyclic shift offsets between different symbols in the frequency domain data of each UE;
said performing frequency offset estimation on the frequency domain data of each UE comprises:
performing frequency offset estimation by using the frequency domain data with elimination of offsets.

6. A decoding apparatus for an uplink control channel, comprising:

an analyzing and separating module (91), which is configured to analyze received uplink control channel data by using a spread spectrum sequence, separate frequency domain data multiplexed by user equipments, UE, on each symbol of a same resource block, RB, and obtain frequency domain data of each UE;
a frequency offset estimating and compensating module (92), which is configured to perform frequency offset estimation and frequency offset compensation on the frequency domain data of each UE when cyclic shifts of all UEs on the same RB in a same time slot are staggered with each other; and
a decoding processing module (93), which is configured to perform subsequent decoding processing on the data after frequency offset compensation;
the frequency offset estimating and compensating module (92) comprises:

a conjugate multiplication sub-module (922), which is configured to perform conjugate multiplication on pilot frequency data extracted from the frequency domain data and a corresponding orthogonal sequence when cyclic shifts of all UEs on the same RB in the same time slot are staggered with each other;
a frequency offset estimation sub-module (923), which is configured to perform frequency offset estimation by using a conjugate multiplication result; and
a frequency offset compensation sub-module (924), which is configured to perform frequency offset compensation on the frequency domain data by using an obtained frequency offset estimation value;

the frequency offset estimating and compensating module (92) further comprises:

a judging and decoding sub-module (921), which is configured to judge whether cyclic shifts of all UEs on the same RB in the same time slot are staggered with each other, and when judging that the cyclic shifts of all UEs on the same RB in the same time slot are not staggered with each other, directly perform the subsequent decoding processing on the frequency domain data of each UE;
the judging and decoding sub-module (921) being configured to judge whether cyclic shifts of all UEs on the same RB in the same time slot are staggered with each other is that the judging and decoding sub-module is configured to firstly judge whether a cyclic shift interval is 3, and if yes, consider that the cyclic shifts of all UEs on the same RB in the same time slot are staggered with each other, otherwise, then judge whether the cyclic shifts of all UEs on the same RB in the same time slot are staggered with each other.

7. The apparatus according to claim 6, wherein,
the analyzing and separating module (91) is configured to separate the frequency domain data multiplexed by UEs on each symbol through distinguishing between cyclic shifts, or cyclic shifts and orthogonal sequence index numbers.

8. The apparatus according to claim 6, wherein, the decoding processing module (93) comprises:

a discontinuous transmission, DTX, judging sub-module (931), which is configured to perform discontinuous transmission, DTX, judgment on the data after frequency offset compensation; and
a demodulation processing sub-module (932), which is configured to perform balance combination and demodulation when judged as continuous transmission and a data format is 1a or 1b.

9. The apparatus according to claim 8, wherein,
the decoding processing module (93) further comprises a power calculating module (933), which is configured to perform block-wise spread on the data after frequency offset compensation to obtain a data detection window and a pilot detection window, and calculate noise power and signal power of each UE according to the data detection window and the pilot detection window;
the DTX judging sub-module (931) is configured to perform DTX judgment on data transmitted by said each UE according to the noise power and the signal power, and if a ratio of the signal power to the noise power is greater than a preset threshold, judge to be continuous transmission, and if the ratio is less than or equal to the preset threshold, judge to be discontinuous transmission.

10. The apparatus according to claim 6, wherein, the frequency offset estimating and compensating module (92) further comprises an offset eliminating sub-module (1025), which is configured to eliminate cyclic shift offsets between different symbols in the frequency domain data of each UE; the conjugate multiplication sub-module and the frequency offset compensation sub-module are configured to perform processing by using the frequency domain data with elimination of offsets.

**Patentansprüche**

1. Verfahren zur Dekodierung eines Uplink-Steuerkanals, umfassend:

einen Schritt der Analyse und Trennung, Analyse empfangener Uplink-Steuerkanaldaten durch Verwenden einer gestreuten Spektrumssequenz, Trennen von durch Benutzereinrichtungen, UE, gemultiplexten Frequenzbereichsdaten, auf jedem Symbol des gleichen Ressourcenblocks, RB, und Erhalt von Frequenzbereichsdaten jeder UE (S101);
einen Schritt der Frequenzversatzschätzung und Frequenzkompensation, in dem eine Frequenzversatzschätzung und eine Frequenzversatzkompensation der Frequenzbereichsdaten jeder UE durchgeführt wird, wenn zyklische Verschiebungen aller UE im gleichen RB im gleichen Zeitschlitz zueinander versetzt sind (S102) und einen Schritt der Decodierverarbeitung, bei dem die nachfolgende Decodierverarbeitung der Daten nach der Frequenzversatzkompensation (S103) durchgeführt wird; wobei
der Schritt der Frequenzversatzschätzung und -kompensation weiterhin umfasst:

Beurteilung, ob zyklische Verschiebungen aller UE im selben RB im selben Zeitschlitz zueinander versetzt sind;
wenn ja, den Schritt der Frequenzversatzschätzung und Frequenzversatzkompensation einsetzen und wenn nein, direkt die nachfolgende Decodierverarbeitung durchführen;
wobei diese Frequenzversatzschätzung und Frequenzversatzkompensation der Frequenzbereichsdaten jeder UE umfasst:

Durchführung konjugierter Multiplikation an Steuerfrequenzdaten, die aus den Frequenzbereichsdaten und einer entsprechenden orthogonalen Sequenz extrahiert sind;
Durchführung der Frequenzversatzschätzung unter Verwendung eines Ergebnisses der konjugierten Multiplikation; und
Durchführung der Frequenzversatzkompensation der Frequenzbereichsdaten unter Verwendung eines erhaltenen Frequenzversatz-Schätzwertes;

der Schritt der Beurteilung, ob zyklische Verschiebungen aller UE im selben RB im selben Zeitschlitz zueinander versetzt sind, umfasst: zuerst Beurteilung, ob ein zyklisches Verschiebungsintervall 3 ist, und wenn ja, Annahme, dass die zyklischen Verschiebungsintervalle aller UE im selben RB im selben Zeitschlitz zueinander versetzt sind, ansonsten, Beurteilung, ob die zyklischen Verschiebungen aller UE im selben RB im selben Zeitschlitz zueinander versetzt sind.

2. Verfahren gemäß Anspruch 1, wobei,
der Schritt der Trennung von durch UE gemultiplexten Frequenzbereichsdaten, auf jedem Symbol des gleichen RB, umfasst:
Trennung der durch UE gemultiplexten Frequenzbereichsdaten auf jedem Symbol durch Unterscheidung zwischen zyklischen Verschiebungen oder zyklischen Verschiebungen und orthogonalen Sequenz-Indexnummern.

3. Verfahren gemäß Anspruch 1, wobei,
der Schritt der Decodierverarbeitung umfasst:

Durchführung einer diskontinuierlichen Übertragung, DTX, Beurteilung der Daten nach der Frequenzversatzkompensation; und
Durchführung einer Balance-Kombination und -Demodulation, wenn geurteilt wird, dass es sich um eine kontinuierliche Übertragung handelt und das Datenformat 1a oder 1b ist.

4. Verfahren gemäß Anspruch 3, wobei,
vor Durchführung der DTX-Beurteilung der Schritt der Decodierverarbeitung umfasst außerdem: zuerst Durchführung einer blockweisen Streuung der Daten nach Frequenzversatzkompensation, um ein Datenerkennungsfenster und ein Steuererkennungsfenster zu erhalten, und Berechnung der Rauschleistung und Signalleistung jeder UE entsprechend dem Datenerkennungsfenster und dem Steuererkennungsfenster;
diese Durchführung der DTX-Beurteilung umfasst:
wenn das Verhältnis von Signalleistung zu Rauschleistung größer ist als der voreingestellte Schwellenwert, urteilen, dass es sich um eine kontinuierliche Übertragung handelt und wenn das Verhältnis kleiner oder gleich dem voreingestellten Schwellenwert ist, urteilen, dass es sich um eine diskontinuierliche Übertragung handelt.

5. Verfahren gemäß Anspruch 1, wobei,
vor dieser Frequenzversatzschätzung der Frequenzbereichsdaten jeder UE, der Schritt der Frequenzversatzschätzung und -kompensation weiterhin umfasst:

Eliminierung zyklischer Versatzwechsel zwischen verschiedenen Symbolen in den Frequenzbereichsdaten jeder UE,
diese Durchführung einer Frequenzversatzschätzung der Frequenzbereichsdaten jeder UE umfasst:
Durchführung einer Frequenzversatzschätzung durch Nutzung der Frequenzbereichsdaten mit Eliminierung des Versatzes.

6. Decodiergerät für einen Uplink-Steuerkanal, umfassend:

ein Analyse- und Trennungsmodul (91), das zur Analyse empfangener Uplink-Steuerkanaldaten durch Verwenden einer gestreuten Spektrumssequenz, Trennen von durch Benutzereinrichtungen, UE, gemultiplexten Frequenzbereichsdaten, auf jedem Symbol des gleichen Ressourcenblocks, RB, und Erhalt von Frequenzbereichsdaten jeder UE konfiguriert ist;
Modul zur Frequenzversatzschätzungs- und Frequenzversatzkompensation (92), das zur Durchführung einer Frequenzversatzschätzung und einer Frequenzversatzkompensation an den Frequenzbereichsdaten jeder UE konfiguriert ist, wenn zyklische Verschiebungen aller UE im gleichen RB im gleichen Zeitschlitz zueinander versetzt sind; und
ein Decodierverarbeitungsmodul (93), das zur Durchführung aufeinanderfolgender Decodierverarbeitung der Daten nach Frequenzversatzkompensation konfiguriert ist;
wobei das Frequenzversatzschätzungs- und Frequenzversatzkompensationsmodul (92) weiterhin umfasst:

ein konjugiertes Multiplikations-Submodul (922), das zur Durchführung konjugierter Multiplikation an Steuerfrequenzdaten, die aus den Frequenzbereichsdaten und einer entsprechenden orthogonalen Sequenz jeder UE extrahiert sind, konfiguriert sind, wenn zyklische Verschiebungen aller UE im gleichen RB im gleichen Zeitschlitz zueinander versetzt sind;
ein Frequenzversatzschätzungs-Submodul (923), das zur Durchführung der Frequenzversatzschätzung unter Verwendung eines Ergebnisses der konjugierten Multiplikation konfiguriert ist; und
ein Frequenzversatzkompensations-Submodul (924), das zur Durchführung der Frequenzversatzkompensation der Frequenzbereichsdaten unter Verwendung eines erhaltenen Frequenzversatz-Schätzwertes konfiguriert ist;

wobei das Frequenzversatzschätzungs- und Frequenzversatzkompensationsmodul (92) weiterhin umfasst:
ein Beurteilungs- und Decodier-Submodul (921), das zur Beurteilung konfiguriert ist, ob zyklische Verschiebungen aller UE im selben RB im selben Zeitschlitz zueinander versetzt sind, und wenn geurteilt wird, dass die zyklische Verschiebungen aller UE im selben RB im selben Zeitschlitz, nicht zueinander versetzt sind, direkte Durchführung der folgenden Decodierungsverarbeitung der Frequenzbereichsdaten jeder UE;
das Beurteilungs- und Decodier-Submodul (921), das dazu konfiguriert ist, um zu beurteilen, ob zyklische Verschiebungen aller UE im selben RB im selben Zeitschlitz zueinander versetzt sind, heißt dies, dass das Beurteilungs- und Decodier-Submodul dazu konfiguriert ist zuerst, um zu beurteilen, ob ein zyklisches Verschiebungsintervall 3 ist, und wenn ja, annehmen, dass die zyklischen Verschiebungsintervalle aller UE im selben RB im selben Zeitschlitz zueinander versetzt sind, ansonsten dann Beurteilung, ob die zyklischen Verschiebungen aller UE im selben RB im selben Zeitschlitz zueinander versetzt sind.

7. Gerät gemäß Anspruch 6, wobei,
das Analyse- und Trennungsmodul (91), das konfiguriert ist, um die durch UE gemultiplexten Frequenzbereichsdaten auf jedem Symbol durch Unterscheidung zwischen zyklischen Verschiebungen oder zyklischen Verschiebungen und orthogonalen Sequenz- Indexnummern zu trennen.

8. Das Gerät gemäß Anspruch 6, wobei das Decodierungsverarbeitungsmodul (93) umfasst:

ein Sub-Modul zur diskontinuierlichen Übertragung, DTX (931), das zur Durchführung einer diskontinuierlichen Übertragung, DTX, Beurteilung der Daten nach der Frequenzversatzkompensation konfiguriert ist; und
ein Demodulationsverarbeitungs- Submodul (932), das konfiguriert ist, um eine Balance-Kombination und -Demodulation durchzuführen, wenn geurteilt wird, dass es sich um eine kontinuierliche Übertragung handelt und das Datenformat 1a oder 1b ist.

9. Gerät gemäß Anspruch 8, wobei,
das Decodierverarbeitungsmodul (93) umfasst weiterhin ein Leistungsberechnungsmodul (933), das zur Durchführung einer blockweisen Streuung der Daten nach Frequenzversatzkompensation, um ein Datenerkennungsfenster und ein Steuererkennungsfenster zu erhalten, und Berechnung der Rauschleistung und Signalleistung jeder UE entsprechend dem Datenerkennungsfenster und dem Steuererkennungsfenster konfiguriert ist;
das DTX-Beurteilungsmodul (931) zur Durchführung einer DTX- Beurteilung, der von dieser UE übermittelten Daten entsprechend der Rauschleistung und der Signalleistung, und wenn das Verhältnis von Signalleistung zu Rauschleistung größer ist als der voreingestellte Schwellenwert, zum Urteilen, dass es sich um eine kontinuierliche Übertragung handelt und wenn das Verhältnis kleiner oder gleich dem voreingestellten Schwellenwert ist, zum Urteilen, dass es sich um eine diskontinuierliche Übertragung handelt, ist konfiguriert.

10. Gerät gemäß Anspruch 6, wobei das Frequenzversatzschätzungs- und Frequenzversatzkompensationsmodul (92) weiterhin ein Versatzeliminierungs-Submodul (1025) umfasst, das zur Eliminierung zyklischer Versatzwechsel zwischen verschiedenen Symbolen in den Frequenzbereichsdaten jeder UE konfiguriert ist, wobei das konjugierte Multiplikations- Submodul und das Frequenzversatzkompensations- Submodul konfiguriert sind, um eine Verarbeitung unter Verwendung von Frequenzbereichsdaten mit der Versatzeliminierung durchzuführen.

**Revendications**

1. Méthode de décodage pour un canal de commande de liaison montante, comprenant :

une étape d'analyse et de séparation, analysant des données de canal de commande de liaison montante reçues en utilisant une séquence à spectre étalée, séparant des données de domaine fréquentiel multiplexées par des équipements utilisateur, UE, sur chaque symbole d'un même bloc de ressources, RB, et obtenant de données de domaine fréquentiel de chaque UE (S101) ;
une étape d'estimation et de compensation de décalage de fréquence, effectuant une estimation de décalage de fréquence et une compensation de décalage de fréquence sur les données de domaine fréquentiel de chaque UE lorsque des dérives cycliques de tous les UE sur le même RB dans un même créneau temporel sont décalées les unes par rapport aux autres (S102) ; et
une étape de traitement de décodage, effectuant un traitement de décodage ultérieur sur les données après une compensation de décalage de fréquence (S103) ; dans lequel,
l'étape d'estimation et de compensation de décalage de fréquence comprend en outre de :

juger si des dérives cycliques de tous les UE sur le même RB dans le même créneau temporel sont décalées les unes par rapport aux autres ;
si oui, procéder à la mise en oeuvre de l'étape d'estimation et de compensation de décalage de fréquence, et sinon, effectuer directement le traitement de décodage ultérieur ;
dans laquelle, ladite mise en oeuvre de l'estimation de décalage de fréquence et de la compensation de décalage de fréquence sur les données de domaine fréquentiel de chaque UE comprend de :

effectuer une multiplication par conjugué sur des données de fréquence pilote extraites des données de domaine fréquentiel et une séquence orthogonale correspondante ;
effectuer une estimation de décalage de fréquence en utilisant un résultat de multiplication par conjugué ; et
effectuer une compensation de décalage de fréquence sur les données de domaine fréquentiel en utilisant une valeur d'estimation de décalage de fréquence obtenue ;

l'étape de juger si des dérives cycliques de tous les UE sur le même RB dans le même créneau temporel sont décalées les unes par rapport aux autres comprend de : juger premièrement si un intervalle de dérive cyclique est de 3, et si oui, considérer que les dérives cycliques de tous les UE sur le même RB dans le même créneau temporel sont décalées les unes par rapport aux autres, sinon, juger alors si les dérives cycliques de tous les UE sur le même RB dans le même créneau temporel sont décalées les unes par rapport aux autres.

2. Méthode selon la revendication 1, dans laquelle,
l'étape de séparation de données de domaine fréquentiel multiplexées par des UE sur chaque symbole d'un même RB comprend de :
séparer les données de domaine fréquentiel multiplexées par des UE sur chaque symbole en distinguant des dérives cycliques, ou des dérives cycliques et des numéros d'indice de séquence orthogonale.

3. Méthode selon la revendication 1, dans laquelle,
l'étape de traitement de décodage comprend de :

effectuer un jugement de transmission discontinue, DTX, sur les données après compensation de décalage de fréquence ; et
effectuer une combinaison et une démodulation équilibrée lorsqu'il est jugé qu'il s'agit d'une transmission continue et qu'un format de données est 1a ou 1b.

4. Méthode selon la revendication 3, dans laquelle,
avant d'effectuer le jugement DTX, l'étape de traitement de décodage comprend en outre de : effectuer premièrement un étalement par bloc sur les données après compensation de décalage de fréquence pour obtenir une fenêtre de détection de données et une fenêtre de détection de pilotes, et calculer la puissance de bruit et la puissance de signal de chaque UE conformément à la fenêtre de détection de données et la fenêtre de détection de pilotes ;
ladite mise en oeuvre du jugement DTX comprend de :
si un rapport entre la puissance de signal et la puissance de bruit est supérieur à un seuil prédéfini, juger qu'il s'agit d'une transmission continue, et si le rapport est inférieur ou égal au seuil prédéfini, juger qu'il s'agit d'une transmission discontinue.

5. Méthode selon la revendication 1, dans laquelle,
avant ladite mise en oeuvre de l'estimation de décalage de fréquence sur les données de domaine fréquentiel de chaque UE, l'étape d'estimation et de compensation de décalage de fréquence comprend en outre de :

éliminer des décalages de dérives cycliques entre différents symboles dans les données de domaine fréquentiel de chaque UE ;
ladite mise en oeuvre de l'estimation de décalage de fréquence sur les données de domaine fréquentiel de chaque UE comprend de :
effectuer une estimation de décalage de fréquence en utilisant les données de domaine fréquentiel avec élimination des décalages.

6. Appareil de décodage pour un canal de commande de liaison montante, comprenant :

un module d'analyse et de séparation (91), qui est configuré pour analyser des données de canal de commande de liaison montante reçues en utilisant une séquence à spectre étalée, séparer des données de domaine fréquentiel multiplexées par des équipements utilisateur, UE, sur chaque symbole d'un même bloc de ressources, RB, et obtenir des données de domaine fréquentiel de chaque UE ;
un module d'estimation et de compensation de décalage de fréquence (92), qui est configuré pour effectuer une estimation de décalage de fréquence et une compensation de décalage de fréquence sur les données de domaine fréquentiel de chaque UE lorsque des dérives cycliques de tous les UE sur le même RB dans le même créneau temporel sont décalées les unes par rapport aux autres ; et
un module de traitement de décodage (93), qui est configuré pour effectuer un traitement de décodage ultérieur sur les données après compensation de décalage de fréquence ;
le module d'estimation et de compensation de décalage de fréquence (92) comprend :

un sous-module de multiplication par conjugué (922), qui est configuré pour effectuer une multiplication par conjugué sur des données de fréquence pilote extraites des données de domaine fréquentiel et une séquence orthogonale correspondante lorsque des dérives cycliques de tous les UE sur le même RB dans le même créneau temporel sont décalées les unes par rapport aux autres ;
un sous-module d'estimation de décalage de fréquence (923), qui est configuré pour effectuer une estimation de décalage de fréquence en utilisant un résultat de multiplication par conjugué ; et
un sous-module de compensation de décalage de fréquence (924), qui est configuré pour effectuer une compensation de décalage de fréquence sur les données de domaine fréquentiel en utilisant une valeur d'estimation de décalage de fréquence obtenue ;

le module d'estimation et de compensation de décalage de fréquence (92) comprend en outre :

un sous-module de jugement et de décodage (921), qui est configuré pour juger si des dérives cycliques de tous les UE sur le même RB dans le même créneau temporel sont décalées les unes par rapport aux autres, et lorsqu'il est jugé que les dérives cycliques de tous les UE sur le même RB dans le même créneau temporel ne sont pas décalées les unes par rapport aux autres, effectuer directement le traitement de décodage ultérieur sur les données de domaine fréquentiel de chaque UE ;
le sous-module de jugement et de décodage (921) étant configuré pour juger si des dérives cycliques de tous les UE sur le même RB dans le même créneau temporel sont décalées les unes par rapport aux autres signifie que le sous-module de jugement et de décodage est configuré pour juger premièrement si un intervalle de dérives cycliques est de 3, et si oui, considérer que les dérives cycliques de tous les UE sur le même RB dans le même créneau temporel sont décalées les unes par rapport aux autres, sinon, juger alors si les dérives cycliques de tous les UE sur le même RB dans le même créneau temporel sont décalées les unes par rapport aux autres.

7. Appareil selon la revendication 6, dans lequel,
le module d'analyse et de séparation (91) est configuré pour séparer les données de domaine fréquentiel multiplexées par des UE sur chaque symbole en distinguant des dérives cycliques, ou des dérives cycliques et des numéros d'indice de séquence orthogonale.

8. Appareil selon la revendication 6, dans lequel le module de traitement de décodage (93) comprend :

un sous-module de jugement (931) de transmission discontinue, DTX, qui est configuré pour effectuer un jugement de transmission discontinue, DTX, sur les données après compensation de décalage de fréquence ; et
un sous-module de traitement de démodulation (932), qui est configuré pour effectuer une combinaison et une démodulation équilibrée lorsqu'il est jugé qu'il s'agit d'une transmission continue et qu'un format de données est 1a ou 1b.

9. Appareil selon la revendication 8, dans lequel,
le module de traitement de décodage (93) comprend en outre un module de calcul de puissance (933), qui est configuré pour effectuer un étalement par bloc sur les données après compensation de décalage de fréquence pour obtenir une fenêtre de détection de données et une fenêtre de détection de pilotes, et calculer une puissance de bruit et une puissance de signal de chaque UE conformément à la fenêtre de détection de données et la fenêtre de détection de pilotes ;
le sous-module d'évaluation DTX (931) est configuré pour effectuer un jugement DTX sur des données transmises par chaque UE conformément à la puissance de bruit et la puissance de signal, et si un rapport entre la puissance de signal et la puissance de bruit est supérieur à un seuil prédéfini, juger qu'il s'agit d'une transmission continue, et si le rapport est inférieur ou égal au seuil prédéfini, juger qu'il s'agit d'une transmission discontinue.

10. Appareil selon la revendication 6, dans lequel le module d'estimation et de compensation de décalage de fréquence (92) comprend en outre un sous-module d'élimination de décalages (1025), qui est configuré pour éliminer des décalages de dérives cycliques entre différents symboles dans les données de domaine fréquentiel de chaque UE ;
le sous-module de multiplication par conjugué et le sous-module de compensation de décalage de fréquence sont configurés pour effectuer un traitement en utilisant les données de domaine fréquentiel avec élimination des décalages.

```
┌─────────────────────────────────────────────────┐
│                                                 │       ╱── 101
│   Analyzing received up-link control channel    │      ╱
│  data by using a spread spectrum sequence,      │─────╱
│  separating frequency domain data multiplexed   │
│    by UEs on each symbol of the same RB         │
│                                                 │
└─────────────────────────────────────────────────┘
                        │
                        ▼
┌─────────────────────────────────────────────────┐
│                                                 │       ╱── 102
│   Performing frequency offset estimation and    │      ╱
│  frequency offset compensation on the frequency │─────╱
│  domain data of each UE when cyclic shifts of   │
│  all UEs on the same RB in a same time slot     │
│         are staggered with each other           │
└─────────────────────────────────────────────────┘
                        │
                        ▼
┌─────────────────────────────────────────────────┐
│                                                 │       ╱── 103
│  Performing subsequent decoding processing on   │      ╱
│   the data after frequency offset compensation  │─────╱
│                                                 │
└─────────────────────────────────────────────────┘
```

FIG. 1

Symbol 0    Symbol 1    Symbol 2    Symbol 3    Symbol 4    Symbol 5    Symbol 6

■ Pilot      □ Data

FIG. 2

**FIG. 3**

**FIG. 4**

Start

Whether
the cyclic shift interval
is 3 ——501

No

Whether
cyclic shifts of all
UEs on the same RB in a same time ——502
slot are staggered with
each other

Yes

Yes

No

Directly performing
subsequent decoding
processing

The pilot frequency data extracted
from the frequency domain data and
a corresponding orthogonal sequence ——503
perform the conjugate multiplication

Performing frequency offset
estimation by using the conjugate ——504
multiplication result

Performing frequency offset
compensation on the frequency
domain data by using the obtained ——505
frequency offset estimation value

FIG. 5

Cyclic shift 0
Cyclic shift 1
Cyclic shift 2
Cyclic shift 3
Cyclic shift 4
Cyclic shift 5
Cyclic shift 6
Cyclic shift 7
Cyclic shift 8
Cyclic shift 9
Cyclic shift 10
Cyclic shift 11

Cyclic shift occupied by UE1 in each symbol

Cyclic shift occupied by UE2 in each symbol

FIG. 6

| | | | | | | | |
|---|---|---|---|---|---|---|---|
| Cyclic shift 0 | | | | | | | |
| Cyclic shift 1 | | | | | | | |
| Cyclic shift 2 | | | | | | | |
| Cyclic shift 3 | | | | | | | |
| Cyclic shift 4 | | | | | | | |
| Cyclic shift 5 | | | | | | | |
| Cyclic shift 6 | | | | | | | |
| Cyclic shift 7 | | | | | | | |
| Cyclic shift 8 | | | | | | | |
| Cyclic shift 9 | | | | | | | |
| Cyclic shift 10 | | | | | | | |
| Cyclic shift 11 | | | | | | | |

■ Corresponding cyclic shift value of UE1 after elimination
of cyclic shift offset of each symbol

▨ Corresponding cyclic shift value of UE2 after elimination
of cyclic shift offset of each symbol

FIG. 7

Start

DTX judgment — 801

Continuous transmission

The format is 1a or 1b

Discontinuous transmission          No

Yes — 802

Performing balance combination
and digital demodulation

End

FIG. 8

18

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SEIGO NAKAO et al.** Performance Enhancement of E-UTRA Uplink Control Channel in Fast Fading Environments. *VTC Spring 2009, IEEE 69th Vehicular Technology Conference,* 01 April 2009, 1-5

- **S.COLERI et al.** Channel estimation techniques based on pilot arrangement in OFDM systems. *IEEE TRANSATIONS ON BROADCASTING.,* 01 September 2002, vol. 48 (3), 223-229